# EUROPEAN PATENT SPECIFICATION

(11) **EP 2 930 149 B1**
(45) Date of publication and mention of the grant of the patent: **22.05.2019**
(21) Application number: 13859954.3
(22) Date of filing: 14.11.2013
(51) Int. Cl.: C01G 25/00, B01D 53/94, B01J 23/10, B01J 37/03

(54) **COMPOSITE OXIDE MATERIAL AND ITS USE FOR MANUFACTURING EXHAUST GAS PURIFICATION CATALYSTS**
MISCHOXIDMATERIAL UND DESSEN VERWENDUNG ZUR HERSTELLUNG VON ABGASREINIGUNGSKATALYSATOREN
MATÉRIAU À BASE D'OXYDES MIXTES ET SON UTILISATION POUR LA PRÉPARATION DE CATALYSEURS DE PURIFICATION DE GAZ D'ÉCHAPPEMENT

(30) Priority: 07.12.2012 JP 2012268559
(43) Date of publication of application: 14.10.2015
(73) Proprietor: TOYOTA JIDOSHA KABUSHIKI KAISHA, Toyota-shi, Aichi-ken, 471-8571 (JP)
(72) Inventor: MIURA Masahide, Toyota-shi, Aichi-ken, 471-8571 (JP); MORIKAWA Akira, Nagakute-shi Aichi 480-1192 (JP); TANABE Toshitaka, Nagakute-shi Aichi 480-1192 (JP); KUMATANI Naoki, Nagakute-shi Aichi 480-1192 (JP); KONISHI Kae, Nagakute-shi Aichi 480-1192 (JP)
(74) Representative: Kuhnen & Wacker Patent- und Rechtsanwaltsbüro PartG mbB
(86) International application number: PCT/JP2013/080769
(87) International publication number: WO 2014/087822

(56) References cited:
- EP-A1- 1 516 855
- EP-A1- 1 736 241
- WO-A1-2010/010714
- WO-A1-2012/101505
- JP-A- S63 305 938
- JP-A- 2009 084 061
- JP-A- 2010 241 609
- US-A1- 2012 131 911
- LINGGEN KONG ET AL: "A Novel Chemical Route to Prepare La 2 Zr 2 O 7 Pyrochlore", JOURNAL OF THE AMERICAN CERAMIC SOCIETY., vol. 96, no. 3, 9 November 2012 (2012-11-09), pages 935-941, XP055224113, US ISSN: 0002-7820, DOI: 10.1111/jace.12060
- PHILIPPE E RAISON ET AL: "Thermal expansion behavior of Ce2Zr2O7 up to 898 K in conjunction with structural analyses by neutron diffraction", PHYSICS AND CHEMISTRY OF MINERALS, SPRINGER, BERLIN, DE, vol. 37, no. 8, 5 February 2010 (2010-02-05), pages 555-559, XP019842911, ISSN: 1432-2021

## Description

### Technical Field

The present invention relates to a composite oxide material having oxygen storage capacity. Also discussed in the present disclosure is an exhaust gas purifying catalyst using the same.

### Background Art

Exhaust gas emitted from an internal-combustion engine of a vehicle or the like contains harmful gases such as carbon monoxide (CO), nitrogen oxide (NOx), and unburned hydrocarbon (HC). As an exhaust gas purifying catalyst (so-called three-way catalyst) for decomposing such harmful gases, a ceria-zirconia composite oxide and the like having oxygen storage capacity (OSC) are used as a support catalyst. A substance having oxygen storage capacity (an oxygen storage material) can control an air-fuel ratio (A/F) in a microscopic space by absorbing and releasing oxygen and can suppress a decrease in purification rate due to variations in exhaust gas composition. It is preferable for an oxygen storage material not to deteriorate even if it is exposed to high-temperature exhaust gas.

Patent Literature 1 describes that a ceria-zirconia composite oxide with significantly improved heat resistance, which can exert a considerably high-level oxygen storage capacity even after it has been exposed to high temperatures for a long period of time, can be obtained by adjusting the content ratio of cerium to zirconium in a ceria-zirconia solid solution powder within the range of 43:57 to 48:52 by mole and subjecting the ceria-zirconia solid solution powder to compression molding at a predetermined pressure followed by reduction treatment under predetermined temperature conditions.

### Citation List

### Patent Literature

Patent Literature 1: JP Patent Publication (Kokai) No. 2011-219329

### Summary of the Invention

### Technical Problem

Patent Literature 1 describes that the ceria-zirconia composite oxide described therein is suitable for an exhaust gas purifying catalyst that is used at relatively high temperatures, such as 300°C or higher. When the ceria-zirconia composite oxide with a pyrochlore structure as described in Patent Literature is exposed to excessively high-temperature conditions; however, oxygen storage capacity thereof would decrease due to destabilization of crystal structure caused by surface rearrangement. Accordingly, an oxygen storage material superior in a stability under high temperatures has been desired.

### Solution to Problem

The present inventors focused on the fact that, while a ceria-zirconia composite oxide with a pyrochlore structure is likely to undergo surface rearrangement at high temperatures, a lanthana-zirconia composite oxide with a pyrochlore structure is stable at high temperatures, and conceived of preventing phase shift of the pyrochlore crystals of a ceria-zirconia composite oxide caused by heat by using pyrochlore crystals of a lanthana-zirconia composite oxide. The present invention is summarized as follows.
(1) A composite oxide material comprising
   crystalline particles of a ceria-zirconia composite oxide with a pyrochlore structure and
   crystals of a lanthana-zirconia composite oxide with a pyrochlore structure existing on the particle surface, wherein
   the lanthana-zirconia composite oxide crystals are solidly dissolved in at least a part of said surface of the crystalline particle of a ceria-zirconia composite oxide.
(2) The composite oxide material according to (1), wherein the ratio by weight of the ceria-zirconia composite oxide to the lanthana-zirconia composite oxide is within the range of 1:1 to 9:1. The following are also discussed in the present disclosure.
(3) An oxygen storage material used for an exhaust gas purifying catalyst comprising the composite oxide material according to (1) or (2).
(4) An exhaust gas purifying catalyst comprising the composite oxide material according to (1) or (2).

### Advantageous Effects of the Invention

The composite oxide material according to the present invention has high oxygen storage capacity that is less likely to decrease at high temperatures. The composite oxide material according to the present invention is particularly useful as an oxygen storage material used for an exhaust gas purifying catalyst.

### Brief Description of the Drawings

Fig. 1 schematically shows the crystalline structure at the boundary between pyrochlore CZ and pyrochlore LZ.
Fig. 2 shows an elemental mapping image of pyrochlore LZ/CZ obtained via SEM-EDX analysis of the examples.
Fig. 3 shows a XRD spectrum of pyrochlore LZ/CZ obtained in the examples.
Fig. 4 shows a graph indicating the I_{14/29} values before and after the high-temperature durability test.

### Description of Embodiments

The composite oxide material according to the present invention is characterized in that it comprises crystal particles (i.e. primary particles or secondary particles) of ceria-zirconia composite oxide with a pyrochlore structure (Ce₂Zr₂O₇: hereafter referred to as a "pyrochlore-type ceria-zirconia composite oxide" or "pyrochlore CZ") and crystals of a lanthana-zirconia composite oxide with a pyrochlore structure (La₂Zr₂O₇: hereafter referred to as a "pyrochlore-type lanthana-zirconia composite oxide" or "pyrochlore LZ") that are existing such that they modify or cover the surface of the crystalline particle .

In a ceria-zirconia composite oxide, "with a pyrochlore structure" means that a crystalline phase having a pyrochlore-type orderly arranged structure (*i.e.* the pyrochlore phase) is constituted by cerium ions and zirconium ions. Pyrochlore CZ has an oxygen-deficient site and, upon introduction of an oxygen atom thereinto, the pyrochlore phase shifts into the κ phase (Ce₂Zr₂O₈). On the other hand, the κ phase can shift into the pyrochlore phase when the oxygen atom is released. The oxygen storage capacity of a ceria-zirconia composite oxide is realized by the oxygen absorption/discharge during reciprocal phase shift between the pyrochlore phase and the κ phase.

When pyrochlore CZ is used as an oxygen storage material for an exhaust gas catalyst, the material turns into pyrochlore phase under fuel-rich conditions and it turns into κ phase under fuel-lean conditions. The κ phase of the ceria-zirconia composite oxide is known to shift into a crystalline phase having a fluorite-type structure (CeZrO₄: the fluorite-type phase) as a result of rearrangement. Accordingly, under fuel-lean conditions, in particular fuel-lean conditions at high temperatures, the pyrochlore CZ is likely to turn into the fluorite-type phase, that is inferior in oxygen storage capacity than pyrochlore CZ, via κ phase. Such phase shift is considered to occur from a surface of pyrochlore CZ particle (surface rearrangement). As a result of the surface rearrangement of the pyrochlore CZ particles, oxygen storage capacity of pyrochlore CZ decreases to a significant extent.

Pyrochlore LZ has a pyrochlore-type orderly arranged structure of lanthanum ions and zirconium ions as seen in pyrochlore CZ. The structure of pyrochlore LZ is very stable and does not cause phase shift as seen in pyrochlore CZ, though pyrochlore LZ does not have oxygen storage capacity. In addition, pyrochlore LZ has a structural affinity with pyrochlore CZ. The composite oxide material according to the present invention utilizes such characteristic features of pyrochlore LZ and suppresses surface rearrangement of the pyrochlore CZ particles and the decrease in oxygen storage capacity resulting therefrom by placing pyrochlore LZ to modify or cover the surface of pyrochlore CZ particles.

The composite oxide material according to the present invention is characterized in that the pyrochlore LZ existing on the surface of pyrochlore CZ particles is solidly dissolved in at least a part of the surface of pyrochlore CZ particles. Herein, "solidly dissolved" means that pyrochlore CZ and pyrochlore LZ are stably fused to or integrated with each other at least a part of the boundary and it does not have a clear boundary and is not easily separated.

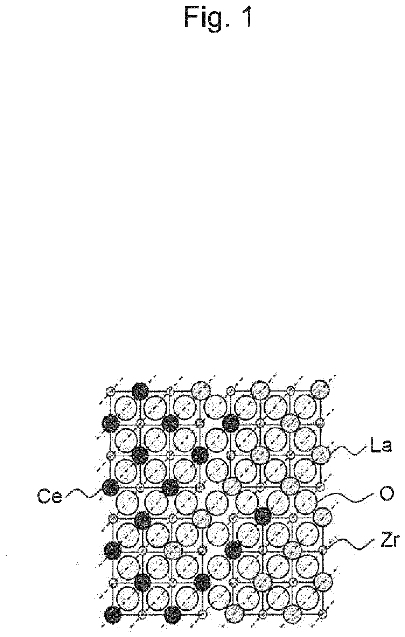

Fig. 1 schematically shows the crystalline structure at the boundary between pyrochlore CZ and pyrochlore LZ. In Fig. 1, the left side represents the pyrochlore CZ side and the right side represents the pyrochlore LZ side. As shown in Fig. 1, in the crystalline structure at the boundary region, cerium ions of pyrochlore CZ and lanthanum ions of pyrochlore LZ are mixed such that it appears that pyrochlore LZ is partially dig into pyrochlore CZ. It is considered that, since the composite oxide material according to the present invention has such structure, the pyrochlore structure is stabilized in the region where a pyrochlore CZ is modified with pyrochlore LZ so as not to cause surface rearrangement and the decrease in oxygen storage capacity due to the phase shift of pyrochlore CZ is suppressed.

In the composite oxide material according to the present invention, the ratio of the ceria-zirconia composite oxide to the lanthana-zirconia composite oxide is preferably within the range of 1:1 to 9:1 by weight in terms of the balance between oxygen storage capacity attained by pyrochlore CZ and the pyrochlore CZ stability attained by pyrochlore LZ.

The crystalline phase of the ceria-zirconia composite oxide can be discerned via X-ray diffraction (XRD) measurement using CuKα. In the XRD pattern, since the diffraction line at 2θ = 14.5° is the one derived from the (111) plane of the ordered phase (κ phase), and the diffraction line at 2θ = 29° is overlapping of a diffraction line derived from the (222) plane of the ordered phase and a diffraction line derived from the (111) plane of the ceria-zirconia solid solution (CZ solid solution), the I_{14/29} value, that is the intensity ratio between the two diffraction lines, can provide an indication of the percentage of the ordered phase maintained (remaining percentage). The completely ordered phase can be classified as a κ phase that is completely filled with oxygen or a pyrochlore phase from which oxygen is completely removed. The I_{14/29} value of the κ phase and that of the pyrochlore phase calculated from the PDF cards (PDF2: 01-070-4048 for the κ phase; PDF2: 01-075-2694 for the pyrochlore phase) are 0.04 and 0.05, respectively.

The composite oxide material according to the present invention can be prepared, for example, in the manner described below. A precipitate comprising pyrochlore CZ particles and lanthanum and zirconia hydroxide formed thereon is generated through inverse coprecipitation from a solution of pyrochlore CZ particles prepared in accordance with a conventional technique and lanthanum salts (e.g. lanthanum nitrate) and zirconia salts (e.g. zirconium oxynitrate) suitable for preparation of lanthania-zirconia composite oxide. The precipitate is subjected to dehydration and calcination, the resulting powder is subjected to compression molding, and the resultant is then heat-reduced in the presence of a reducing agent.

In the composite oxide material according to the present invention, since pyrochlore CZ is stabilized by solid-dissolution of pyrochlore and thereby phase shift of pyrochlore CZ into a fluorite-type structure is suppressed, decrease in oxygen storage capacity at high temperatures is suppressed. Accordingly, the composite oxide material according to the present invention is particularly suitable as an oxygen storage material used for an exhaust gas purifying catalyst.

### Examples

Hereinafter, the present invention is described in greater detail with reference to the examples, although the present invention is not limited to these examples.

### 1. Sample preparation

### (Comparative Example)

Cerium nitrate hexahydrate (121.8 g), zirconium oxynitrate dihydrate (88.0 g), and an 18% hydrogen peroxide solution (34.6 g) were dissolved in 500 ml of ion exchange water. Using the resulting solution and an aqueous 25% ammonia solution (300 g), a hydroxide precipitate was obtained through inverse coprecipitation. The resulting precipitate was separated by filtration, dehydrated via heating in a drying furnace at 150°C for 7 hours, and then calcined in an electric furnace at 400°C for 5 hours. The resulting powder was crushed and ground in a ball mill to obtain a ceria-zirconia solid solution powder with an average particle diameter of 1 µm (1 µm-CZ powder).

Using a compressor (a wet CIP apparatus), 1 µm-CZ powder was molded at a pressure of 3,000 kgf/cm², and the resultant was subjected to heat reduction in a graphite crucible filled with activated carbon under Ar atmosphere at 1,300°C for 5 hours. The resultant was oxidized through calcination in an electric furnace under atmospheric conditions at 500°C for 5 hours, and a pyrochlore-type ceria-zirconia composite oxide (pyrochlore CZ) was obtained.

### (Example)

1 µm-CZ powder was prepared in the same manner as in Comparative Example. 1 µm-CZ powder (29.2 g), lanthanum nitrate (43.3 g), and zirconium oxynitrate dihydrate (68.4 g) were dissolved in 500 ml of ion exchange water. Using the resulting solution and an aqueous 25% ammonia solution (300 g), a precipitate composed of 1 µm-CZ powder and hydroxide formed thereon was obtained via inverse coprecipitation. The resulting precipitate was separated by filtration, dehydrated via heating in a drying furnace at 150°C for 7 hours, calcined in an electric furnace at 400°C for 5 hours, and then calcined at 850°C for an additional 5 hours.

Using a compressor (a wet CIP apparatus), the resulting powder was molded at a pressure of 3,000 kgf/cm², and the resultant was subjected to heat-reduction in a graphite crucible filled with activated carbon under an Ar atmosphere at 1,300°C for 5 hours. The resultant was oxidized through calcination in an electric furnace under atmospheric conditions at 500°C for 5 hours and pyrochlore-type lanthana-zirconia-modified pyrochlore CZ (pyrochlore LZ/CZ) was obtained.

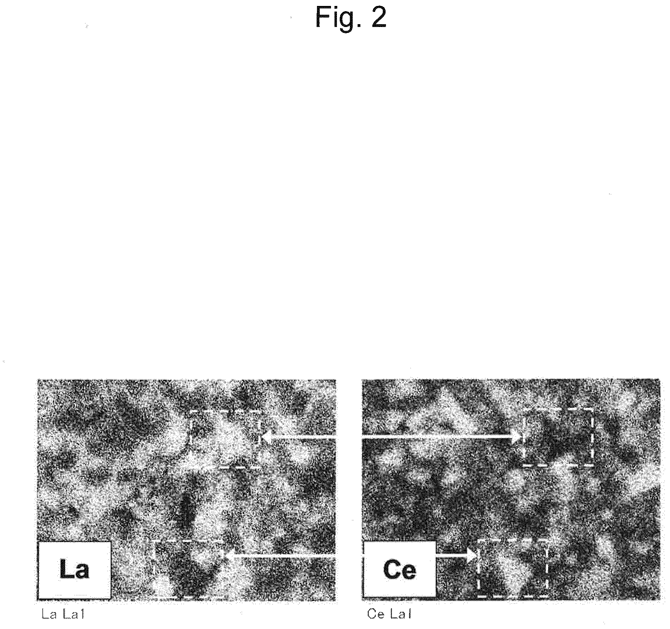

Fig. 2 shows an elemental mapping image of pyrochlore LZ/CZ obtained via SEM-EDX analysis. In Fig. 2, the left image shows an element map of lanthanum, and the right image shows an element map of cerium. In particular, a comparison of framed regions indicates that cerium is absent at a site where lanthanum is present and that lanthanum is absent at a site where cerium is present.

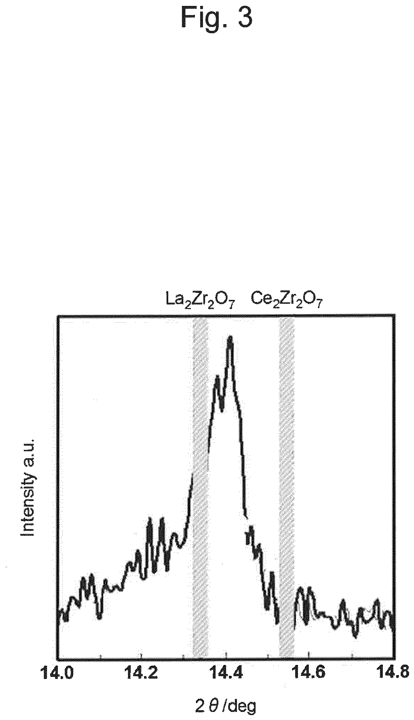

Fig. 3 shows the XRD spectrum of pyrochlore LZ/CZ. Shaded regions in the spectra represent the 2-θ regions that are known to show the La₂Zr₂O₇ peak and the Ce₂Zr₂O₇ peak, respectively. In the pyrochlore LZ/CZ spectrum, the La₂Zr₂O₇ peak was shifted to a higher value, and the Ce₂Zr₂O₇ peak was shifted to a lower value. This indicates that pyrochlore LZ/CZ is not composed of pyrochlore LZ separately from pyrochlore CZ but that pyrochlore LZ forms a solid solution with pyrochlore CZ in at least a part thereof.

### 2. High-temperature durability test

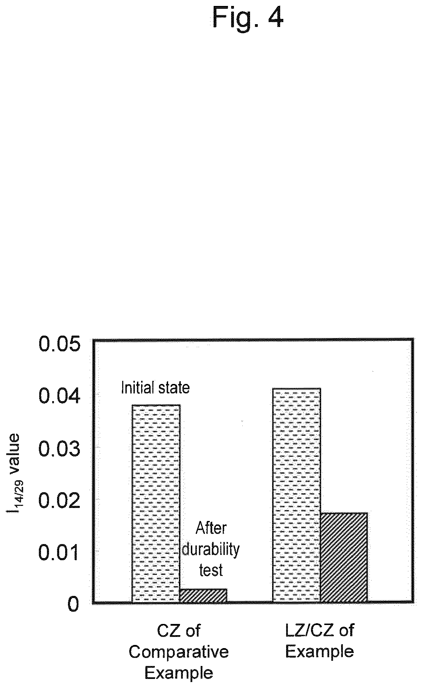

The samples were heated in an electric furnace under atmospheric conditions at 1,100°C for 5 hours, and whether or not the pyrochlore structure remained was inspected. Evaluation was carried out by X-ray diffraction analysis of the crystalline phase. The X-ray diffraction pattern was obtained by an X-ray diffraction apparatus using CuKα, and the intensity ratio between the diffraction line at 2θ = 14.5° and the diffraction line at 2θ = 29° (the I_{14/29} value) was measured. Since the presence of the κ phase was presumed when measurement was carried out after oxidation, the pyrochlore phase percentage was deemed to be 100% when the I_{14/29} value is 0.04. Measurement was carried out using a measuring apparatus manufactured by Rigaku Corporation under the product name "RINT2100" under conditions of 40 KV, 30 mA, and 2θ of 2°/min. The results of the measurement are shown in Fig. 4. While the I_{14/29} value of pyrochlore CZ of the Comparative Example significantly dropped after the durability test, decrease in the I_{14/29} value is suppressed in pyrochlore LZ/CZ of Example.

All publications, patents, and patent applications cited herein are incorporated herein by reference in their entirety.

## Claims

1. A composite oxide material comprising
crystalline particles of a ceria-zirconia composite oxide with a pyrochlore structure and
crystals of a lanthana-zirconia composite oxide with a pyrochlore structure existing on a surface of said particle, wherein
the lanthana-zirconia composite oxide crystals are solidly dissolved in at least a part of said surface of the crystalline particle of a ceria-zirconia composite oxide.

2. The composite oxide material according to claim 1, wherein the ratio by weight of the ceria-zirconia composite oxide to the lanthana-zirconia composite oxide is within the range of 1:1 to 9:1.

3. Use of the composite oxide material according to claim 1 or 2 as an oxygen storage material in the manufacture of exhaust gas purifying catalysts.

## Patentansprüche

1. Verbundoxidmaterial, aufweisend:
kristalline Partikel von einem Cer-Zirkonium-Verbundoxid mit einer Pyrochlorstruktur und
Kristalle von einem Lanthan-Zirkonium-Verbundoxid mit einer Polychlorstruktur, die auf einer Oberfläche des Partikels existiert, wobei
die Lanthan-Zirkonium-Verbundoxidkristalle in zumindest einem Teil von der Oberfläche des kristallinen Partikels von einem Cer-Zirkon-Verbundoxid in fester Form aufgelöst sind.

2. Verbundoxidmaterial nach Anspruch 1, wobei das Gewichtsverhältnis des Cer-Zirkonium-Verbundoxids zu dem Lanthan-Zirkonium-Verbundoxid innerhalb des Bereichs von 1:1 bis 9:1 ist.

3. Verwendung des Verbundoxidmaterials nach Anspruch 1 oder 2 als ein Sauerstoffspeichermaterial in der Herstellung von Abgasreinigungskatalysatoren.

## Revendications

1. Matériau en oxyde composite comprenant
des particules cristallines d'un oxyde composite d'oxyde de cérium et de zircone ayant une structure de pyrochlore, et
des cristaux d'un oxyde composite d'oxyde de lanthane et de zircone ayant une structure de pyrochlore existant sur une surface de ladite particule, dans lequel les cristaux d'oxyde composite d'oxyde de lanthane et de zircone sont dissous à l'état solide dans au moins une partie de ladite surface de la particule cristalline d'un oxyde composite d'oxyde de cérium et de zircone.

2. Matériau en oxyde composite selon la revendication 1, dans lequel le rapport en poids de l'oxyde composite d'oxyde de cérium et de zircone à l'oxyde composite d'oxyde de lanthane et de zircone est situé dans la plage allant de 1/1 à 9/1.

3. Utilisation du matériau en oxyde composite selon la revendication 1 ou 2 en tant que matériau de stockage d'oxygène dans la fabrication de catalyseurs de purification de gaz d'échappement.
